# EUROPEAN PATENT APPLICATION

(11) **EP 4 436 008 A1**
(43) Date of publication of application: **25.09.2024**
(21) Application number: 22906629.5
(22) Date of filing: 15.12.2022
(51) Int. Cl.: H02K 1/16, H02K 3/12

(54) **STATOR ASSEMBLY AND ELECTRIC MOTOR**

(30) Priority: 17.12.2021 CN 202111554823; 21.04.2022 CN 202210422819
(71) Applicant: Shanghai EVK E-Motor Technology Co., Ltd., Shanghai 201208 (CN)
(72) Inventor: LU, Fangyou, Shanghai 201208 (CN)
(74) Representative: Wang, Bo
(86) International application number: PCT/CN2022/139199
(87) International publication number: WO 2023/109884

(57) **Abstract**

The present disclosure relates to the technical field of flat wire motors, and in particular, relates to a stator assembly and a motor. m+n layers of conductive wires are successively arranged in each of the stator slots along a radial direction of the stator core, wherein the m layers of conductive wires close to an outer side of the stator core are double conductive wire layers, and the remaining n layers of conductive wires are single conductive wire layers, m being greater than or equal to 1, and n being an even number greater than or equal to 2; and at a welding end of the stator winding, all the remaining conductive wires closest to a center of the stator core, except conductive wires serving as lead-out wires, are welded into a same layer. In-slot conductive wires in a layer closest to the center of the stator core are welded into a same layer. That is, turning directions of the conductive wires closest to the center of the stator core in the stator winding are not consistent at the welding end, such that an equalization state of the stator winding is achieved.

## Description

### TECHNICAL FIELD

The present disclosure relates to the technical field of flat wire motors, and in particular, relates to a stator assembly and a motor.

### BACKGROUND

To improve the slot fill ratio of motors, an increasing number of motor designs are opting for square wires or flat wire motor schemes. For a further improvement on space utilization of the motors, the unequal slot width design is proposed. However, in the related art, challenges are significant in circuit balancing in terms of winding design, wire forming, and stator winding.

### SUMMARY

In view of the above problem, embodiments of the present disclosure provide a stator assembly. The stator assembly includes a stator core and a stator winding; wherein
a plurality of stator slots are defined in the stator core, the stator slots being successively arranged in an annular array along a circumferential direction of the stator core; and wires of the stator winding are rectangular conductive wires, the wires being evenly and symmetrically arranged in the stator slots;
m+n layers of conductive wires are successively arranged in each of the stator slots along a radial direction of the stator core, wherein the m layers of conductive wires close to an outer side of the stator core are double-conductive wire layers, and the remaining n layers of conductive wires are single-conductive wire layers, m being greater than or equal to 1, and n being an even number greater than or equal to 2; and
at a welding end of the stator winding, all the remaining conductive wires closest to a center of the stator core, except conductive wires serving as lead-out wires, are welded into a same layer.

In some embodiments, when the lead-out wires are positioned at a hairpin end, in-slot conductive wires in a layer closest to the center of the stator core that are positioned at the welding end are welded into a same layer; or when the lead-out wires are positioned at the welding end, all the remaining in-slot conductive wires, except the conductive wires serving as the lead-out wires, in the layer closest to the center of the stator core that are positioned at the welding end are welded into a same layer.

In some embodiments, at the welding end of the stator winding, end portions of all the remaining in-slot conductive wires, except the conductive wires serving as the lead-out wires, in the layer closest to the center of the stator core are organized into two turning directions, wherein the end portions of the in-slot conductive wires in a same turning direction are each provided with a bending portion, the bending portion being bent towards the center of the stator core.

In some embodiments, a vacant slot is arranged at an end, close to the center of the stator core, of each of the stator slots, and the bending portion is positioned in the vacant slot.

In some embodiments, when the number m of layers of the double-conductive wire layers is equal to 3:
with respect to spanning of the stator winding at the hairpin end, the conductive wires in a layer closest to the center of the stator core combined spanning of long pitch, full pitch, and short pitch, and the conductive wires in the other layers merely employ full pitch spanning; and with respect to connection at the hairpin end, No. 1 conductive wire is connected to No. 2 conductive wire in another stator slot, No. 3 conductive wire is connected to No. 5 conductive wire in another stator slot, No. 4 conductive wire is connected to No. 6 conductive wire in another stator slot, and No. a conductive wire is connected to No. a+1 conductive wire in another stator slot; and
with respect to spanning of the stator winding at the welding end, the conductive wires are full pitch spanning; and with respect to connection at the welding end, No. 1 conductive wire is connected to No. 3 conductive wire in another stator slot, No. 2 conductive wire is connected to No. 2 conductive wire in another stator slot, No. b conductive wire is connected to No. b+1 conductive wire in another stator slot, and No. 6+n conductive wire is connected to No. 6+n conductive wire in another stator slot;
wherein a is an odd number, and 6+1≤a<6+n; b is an even number, and 4≤b<6+n; n is the number of single-conductive wire layers, 3+n is the number of all the conductive wire layers in the stator slots, and 6+n is the number of conductive wires in the stator slots.

In some embodiments, each phase winding of the stator winding comprises one or a plurality of branches, each of the branches is formed by a plurality of minimum equalizer units connected in series and/or in parallel.

In some embodiments, in a same branch, the rectangular conductive wires in different conductive wire layer groups are connected in series.

In some embodiments, the stator slots are unequal-width stator slots, and widths of the stator slots receiving the double-conductive wire layers are greater than widths of the stator slots receiving the single-conductive wire layers.

In some embodiments, the widths of the double-conductive wire layers closest to an outer circumferential side of the stator core are maximum.

In some embodiments, in a same stator slot, a thickness of the conductive wire in a double-conductive wire layer closest to the outer circumferential side of the stator core is less than a thickness of the conductive wire in any of the other double-conductive wire layers; and a width of the conductive wire in the double-conductive wire layer closest to the outer circumferential side of the stator core is greater than a width of the conductive wire in any of the other double-conductive wire layers.

In some embodiments, the stator slots are equal-width stator slots.

In some embodiments, in a same stator slot, a sum of widths of all the conductive wires in the double-conductive wire layers is equal to a width of a single-conductive wire layer.

In some embodiments, a length-to-width ratio of the rectangular conductive wire in the double-conductive wire layer is not greater than 2.5, and a length-to-width ratio of the rectangular conductive wire in the single-conductive wire layer is not greater than 3.

Embodiments of the present disclosure further provide a motor. The motor includes the stator assembly as described above.

The present disclosure achieves the following beneficial effects:
1. By arranging two conductive wires in the wire layer close to the outer side of the stator core, an excessively large width-to-width ratio of single-slot wires is effectively avoided, a turning radius required in the wire forming is reduced, and a thickness of an end portion of an axial winding of the motor is reduced.
2. In-slot conductive wires in a layer closest to the center of the stator core are welded into a same layer. That is, turning directions of the conductive wires closest to the center of the stator core in the stator winding are not consistent at the welding end, such that an equalization state of the stator winding is achieved.
3. In the span and layer connection mode proposed in the present disclosure, the stator winding is composed of several minimum equalization units, and each branch of each phase winding is composed of a plurality of minimum equalization units connected in series and/or in parallel, such that it is ensured that the stator winding as a whole reaches a circuit equalization state.
4. Under the condition that the total cross-sectional areas of the conductive wires in the stator slot are similar, reducing the length-to-width ratios of the rectangular conductive wires is conducive to U-shaped line formation and better processability. At the same time, by adjusting the lengths and widths of the rectangular conductive wires in the stator slot, adjusting the stator slot type, using the stator teeth, adjusting the radial distance of the stator slot, adjusting the inner diameter of the stator and adjusting the stator yoke, magnetic density distributions of all parts of the stator assembly are reasonable, the slot fill rate is improved, and the operating efficiency of the motor is improved.
5. Compared with the related art, the stator assembly according to the present disclosure reduces the number of conductive wire layers in the stator slot along the radial direction of the stator core, lowers the requirements for the twist head tooling, and improves the production quality and efficiency.

Other features and advantages of the present disclosure are described hereinafter in the specification, which are partially apparent over the specification or acknowledged by practice of the present disclosure. The objectives and other advantages of the present disclosure may be practiced and obtained by using the specifically designated structures in the specification, claims and accompanying drawings.

### BRIEF DESCRIPTION OF THE DRAWINGS

For clearer descriptions of the technical solutions in the embodiments of the present disclosure or in the related art, the following briefly introduces the accompanying drawings required for describing the embodiments or the related art. Apparently, the accompanying drawings in the following description show some embodiments of the present disclosure, and a person of ordinary skill in the art may still derive other drawings from these accompanying drawings without creative efforts.
FIG. 1 is a schematic structural view of a stator slot according to some embodiments of the present disclosure;
FIG. 2 is a schematic structural view of five conductive wire layers in a stator slot according to some embodiments of the present disclosure;
FIG. 3 is a schematic structural view of a bending portion and a turning end of a conductive wire according to some embodiments of the present disclosure;
FIG. 4 is a schematic structural view of some vacant slots in a stator slot according to some embodiments of the present disclosure;
FIG. 5 is a schematic structural view of three double-conductive wire layers and n single-conductive wire layers in a stator slot according to some embodiments of the present disclosure;
FIG. 6 is a schematic diagram of a phase pole according to some embodiments of the present disclosure;
FIG. 7 is a schematic diagram of a winding path of a minimum equalization unit when a lead-out wire outgoes at a welding end according to some embodiments of the present disclosure;
FIG. 8 is a schematic diagram of a winding path of a minimum equalization unit when a lead-out wire outgoes at a hairpin end according to some embodiments of the present disclosure;
FIG. 9 is a schematic cross-sectional view of a welding end of a stator assembly according to some embodiments of the present disclosure;
FIG. 10 is a partial sectional view of a stator core with six independent conductive wire layer groups in unequal-length stator slots according to some embodiments of the present disclosure; and
FIG. 11 is a partial sectional view of a stator core with two independent conductive wire layer groups in equal-length stator slots according to some embodiments of the present disclosure.

Reference numerals and denotations thereof: 1-stator slot; 2-vacant slot; 3-bending portion; 4-combined conductive wire layer group; 5-independent conductive wire layer group; 6-stator core.

### DETAILED DESCRIPTION

For clearer descriptions of the objectives, technical solutions, and advantages of the embodiments of the present disclosure, the following clearly and completely describes the technical solutions in the embodiments of the present disclosure with reference to the accompanying drawings in the embodiments of the present disclosure. Apparently, the described embodiments are merely a part rather than all of the embodiments of the present disclosure. Based on the embodiments of the present disclosure, all other embodiments derived by persons of ordinary skill in the art without any creative efforts shall fall within the protection scope of the present disclosure.

The applicant has recognized that: In the conventional unequal-slot-width design, the conductive wires in outer circular slots typically define an excessive width-to-width ratio. The conductive wires with a large width-to-width ratio are difficult to form, and an end portion of the winding is over-sized due to a large turning radius required for turning ends of the conductive wires, and thus there is no advantage in terms of space utilization. Especially when a width difference between an outer circular slot and an inner circular slot is large, the winding design and wire formation may be more challenging.

In addition, the manufacturing cost of flat wire motors is high, and circuit equalization between branches needs to be ensured to bring its performance to full play. However, in the related art, when an even number of conductive wires are arranged in the stator slot, in order to reduce the difficulty of the motor production process, the turning directions of the in-slot conductive wires at the slot are set as the same direction. As a result, the current stator winding with an even number of conductive wires in the slot fails to achieve circuit equalization.

Some embodiments of the present disclosure provide an unequal-width slot motor having an even number of in-slot conductive wires. The motor includes a stator assembly. The stator assembly includes a stator core and a stator winding. The stator core is generally cylindrical in shape to accommodate a rotor assembly within the stator core. A plurality of stator slots are arranged in the stator core. The stator slots are successively arranged in an annular array along a circumferential direction of the stator core. The windings of the stator winding use rectangular conductive wires, and the windings are uniformly and symmetrically arranged in the stator slot.

Specifically, the stator windings may be organized into in-slot windings and end windings. The in-slot windings refer to a portion of the rectangular conductive wires in the stator slot, also referred to as in-slot conductive wires. The end windings refer to portions of the rectangular conductive wires on both sides of the stator core. The function of the end windings is to couple rectangular conductive wires at different positions in different stator slots in a specific span to achieve internal connection of the stator windings. The end windings are distributed on both sides of the stator core and are referred to as a hairpin end and a welding end, respectively.

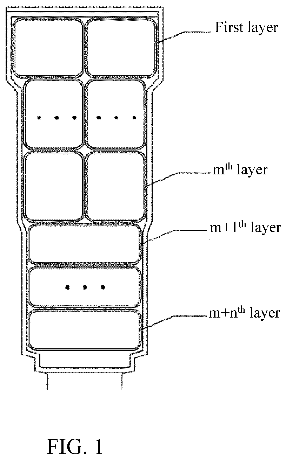

In some embodiments, as illustrated in FIG. 1, m+n layers of conductive wires are successively arranged in each of the stator slots along a radial direction of the stator core, wherein in the m layers of conductive wires close to an outer side of the stator core, each layer is provided with two conductive wires, referred to as a double-conductive wire layer, and the two conductive wires in the same double-conductive wire layer are successively arranged along an axial direction of the stator core of the stator slot; and the remaining n layers e double-conductive wire layers, and the remaining n layers of conductive wires are all provided with only one conductive wire, referred to as single-conductive wire layers, wherein m is greater than or equal to 1, and n is an even number greater than or equal to 2.

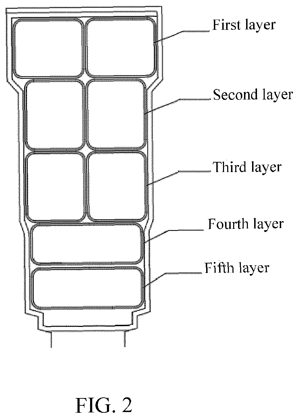

Exemplarily, as illustrated in FIG. 2, three conductive wire layers close to an outer circumferential side of the stator core in the stator slot are respectively denoted as a first conductive wire layer, a second conductive wire layer and a third conductive wire layer, and are all double-conductive wire layers; and two conductive wire layers close a center of the stator core are respectively denoted as a fourth conductive wire layer and a fifth conductive wire layer, and are both single-conductive wire layers.

In some embodiments, a width of the stator slot at the double-conductive wire layer is greater than a width of the stator slot at the single-conductive wire layer; and in all the double-conductive wire layers, a width of the double-conductive wire layer closest to the outer circumferential side of the stator core is greater than widths of the other double-conductive wire layers. The width herein refers to a length of the conductive wire layer along a circumferential direction of the stator core. By arranging two conductive wires in the wire layer close to the outer side of the stator core, an excessively large width-to-width ratio of single-slot wires is effectively avoided, a turning radius required in the wire forming is reduced, and a thickness of an end portion of an axial winding of the motor is reduced.

In a same stator slot, a thickness of the conductive wire in a double-conductive wire layer closest to the outer circumferential side of the stator core is less than a thickness of the conductive wire in any of the other double-conductive wire layers; and a width of the conductive wire in the double-conductive wire layer closest to the outer circumferential side of the stator core is greater than a width of the conductive wire in any of the other double-conductive wire layers.

Exemplarily, as illustrated in FIG. 2, a thickness of a conductive wire in the first conductive wire layer is less than a thickness of a conductive wire in each of the second conductive wire layer and the third conductive wire layer; and a width of the conductive wire in the first conductive wire layer is greater than a width of the conductive wire in the second conductive wire layer or the third conductive wire layer. This design is applicable to the case where a width difference between an outer circular slot and an inner circular slot is large. A space of the teeth of the stator can be fully used, and two sides of the teeth are almost parallel to each other. Furthermore, the hairpin end of the first conductive wire layer sufficiently reduces a thickness of the end portion by taking advantage of the radial space.

Further, at a welding end of the stator winding, all the remaining conductive wires closest to a center of the stator core, except conductive wires serving as lead-out wires, are welded into a same layer. That is, at the welding end, an in-slot conductive wire closest to the center of the stator core in one stator slot is connected to an in-slot conductive wire closest to the center of the stator core in another stator slot.

Specifically, when the lead-out wires are positioned at the welding end, all the remaining in-slot conductive wires, except the conductive wires serving as the lead-out wires, in the layer closest to the center of the stator core that are positioned at the welding end are welded into a same layer. when the lead-out wires are positioned at the welding end, all the remaining in-slot conductive wires, except the conductive wires serving as the lead-out wires, in the layer closest to the center of the stator core that are positioned at the welding end are welded into a same layer.

In-slot conductive wires in a layer closest to the center of the stator core are welded into a same layer. That is, turning directions of the conductive wires closest to the center of the stator core in the stator winding are not consistent at the welding end, such that an equalization state of the stator winding is achieved.

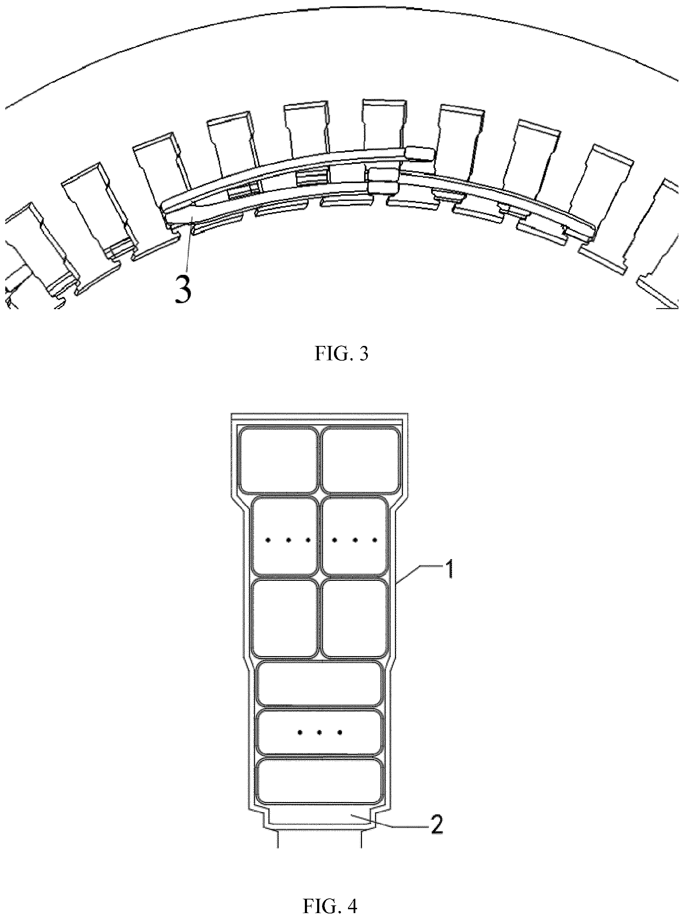

In some embodiments, as illustrated in FIG. 3, at the welding end, end portions of all the remaining in-slot conductive wires, except the conductive wires serving as the lead-out wires, in the layer closest to the center of the stator core are organized into two turning directions, wherein the end portions of the in-slot conductive wires in a same turning direction are each provided with a bending portion 3, wherein the bending portion 3 is bent towards the center of the stator core; and at the other end of the bending portion 3, the conductive wire is turned to a predetermined turning direction.

By taking advantage of a radial inner circular space of the stator core, the end windings can be welded when the turning directions are different.

As illustrated in FIG. 4, a vacant slot 2 is arranged at an end, close to the center of the stator core, of each of the stator slots 1, and the bending portion is positioned in the vacant slot 2. Under this design, the stator windings may not exceed an inner circle of the stator core, and AC loss is effectively reduced.

In-slot conductive wires in a layer closest to the center of the stator core are welded into a same layer. That is, the turning directions of the conductive wires closest to the center of the stator core in the stator winding are not consistent at the welding end, such that an equalization state of the stator winding is achieved.

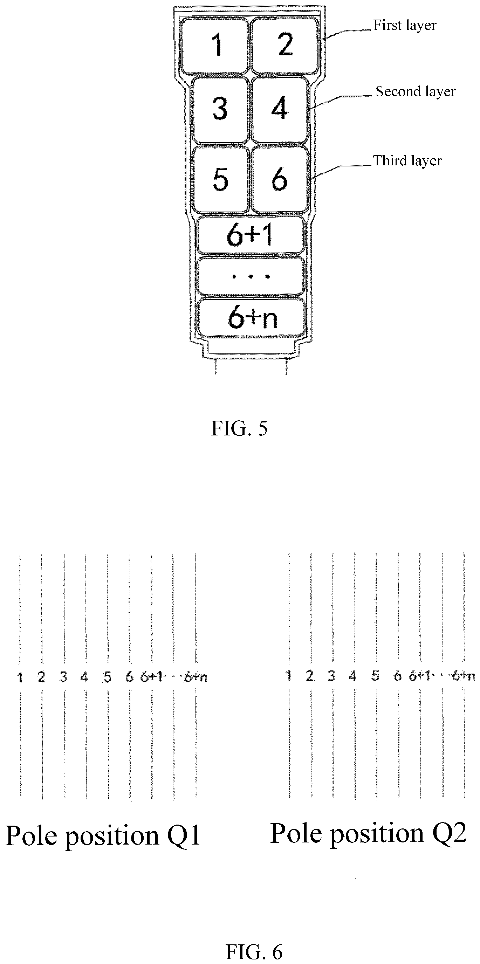

Further, when the number of double-conductive wire layers in the stator slot is 3, that is, m = 3, the stator windings adopt the following spanning and connection fashions, and a circuit equalization state of the stator windings can be achieved. For ease of illustration, the conductive wires in each stator slot are numbered. As illustrated in FIG. 5, two wires in the first double-conductive wire layer are defined as No. 1 conductive wire and No. 2 conductive wire; two conductive wires in the second two-conductor wire layer are defined as No. 3 conductive wire and No. 4 conductive wire number; two conductive wires in the third double-conductive wire layer are defined as No. 5 conductive wire and No. 6 conductive wire; all the remaining single-conductive wire layers, along the outer circumferential slot to the inner circumferential side of the stator core, are successively defined as No. 6+1 conductive wire, No. 6+2 conductive wire, ..., No. 6+n conductive wire. N is an even number greater than or equal to 2.

Specifically, with respect to spanning of the stator winding at the hairpin end, the conductive wires in a layer closest to the center of the stator core employ combined spanning of long pitch, full pitch, and short pitch, and the conductive wires in the other layers merely employ full pitch spanning; and with respect to connection at the hairpin end, No. 1 conductive wire is connected to No. 2 conductive wire in another stator slot, No. 3 conductive wire is connected to No. 5 conductive wire in another stator slot, No. 4 conductive wire is connected to No. 6 conductive wire in another stator slot, and No. a conductive wire is connected to No. a+1 conductive wire in another stator slot; and

with respect to spanning of the stator winding at the welding end, the conductive wires employ full pitch spanning; and with respect to connection at the welding end, No. 1 conductive wire is connected to No. 3 conductive wire in another stator slot, No. 2 conductive wire is connected to No. 2 conductive wire in another stator slot, No. b conductive wire is connected to No. b+1 conductive wire in another stator slot, and No. 6+n conductive wire is connected to No. 6+n conductive wire in another stator slot;
wherein a is an odd number, and 6+1≤a<6+n; b is an even number, and 4≤b<6+n; n is the number of single-conductive wire layers, 3+n is the number of all the conductive wire layers in the stator slots, and 6+n is the number of conductive wires in the stator slots.

Paths are defined according to the spanning and connection fashions as described above, such that the stator winding is composed of several minimum equalization units, and each branch of each phase winding is composed of a plurality of minimum equalization units connected in series and/or in parallel. Therefore, it can be ensured that the stator winding as a whole reaches a circuit equalization state.

It should be understood that the minimum equalization unit refers to a sub-winding structure composed of winding elements of different phases, i.e., different levels. A branch winding of one phase winding of a motor includes several such sub-winding structures connected in series. As long as the number of sub-windings connected in series is made equal between different branches, it can be ensured that the windings between each branch of the phase winding of the motor are the same in terms of phase and inductance (i.e., the motor winding is an equalization winding).

Exemplarily, a 48-slot 3-phase 8-pole winding is described as an example, i.e., the number Z of stator slots on the stator core is 48, the number p of poles of the stator winding is 8, and the number m of phases of the stator winding is 3. Thus, the number of slots per phase per pole is Q = Z/(P * m) = 2, and the a full pitch is C1 = Z/P = 6.

Two stator slots disposed in the same stage under the same phase winding are defined as one phase pole, and two stator slots in the same phase pole are defined as a pole position Q1 and a pole position Q2, respectively. As shown in FIG. 6, 6+n wires are arranged in both the pole position Q1 and the pole position Q2.

For ease of understanding, the stator slots and the conductive wires within the stator slots are named sequentially along a circumferential direction of the stator core. Exemplarily, Z1(1) represents No. 1 conductive wire in No. 1 slot and Z2(3) represents No. 3 conductive wire in No. 2 slot.

The stator windings are three-phase windings, including a W-phase winding, a V-phase winding, and a U-phase winding, and each phase winding includes one or a plurality of branches. Each of the branches is formed by a plurality of minimum equalizer units connected in series and/or in parallel.

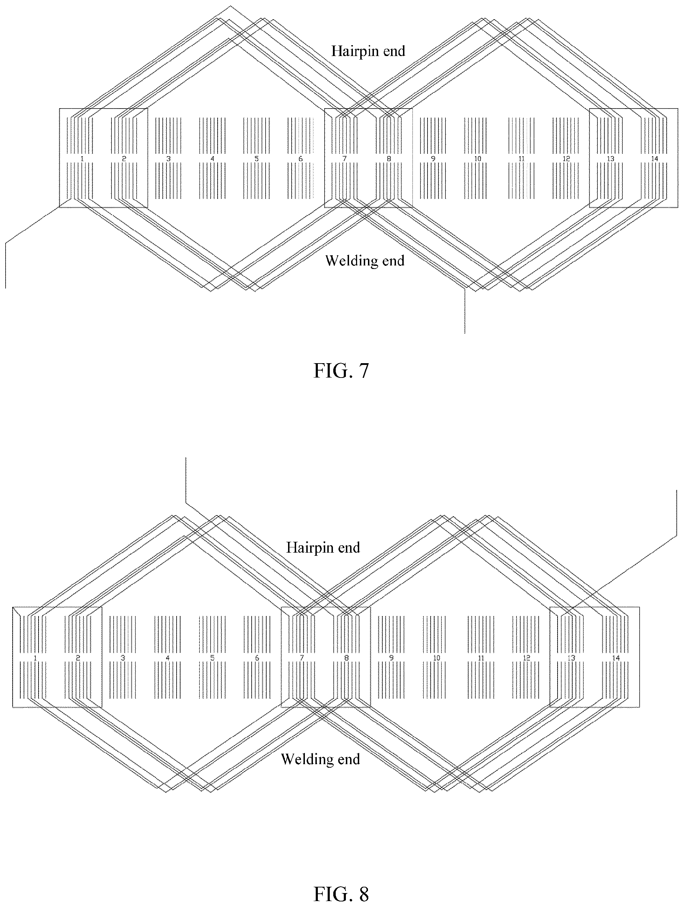

Exemplarily, when the lead-out wire outgoes at the welding end, as illustrated in FIG. 7, the winding path of a minimum equalization unit is as follows: Z1(2)→Z8(1)→Z2(3)→Z8(5)→Z2(4)→Z8(6)→Z2(6+1)→Z8(6+2)→Z2(6+3)→...→Z8(6+n )→Z14(6+n)→Z8(6+n-1)→...→Z14(6)→Z8(4)→Z14(5)→Z8(3)→Z14(1)→Z8(2)→Z2(2)→ Z7(1)→Z1(3)→Z1(5)→Z1(4)→Z7(6)→Z1(6+1)→Z7(6+2)→Z1(6+3)→...→Z7(6+n)→Z13( 6+n) →Z7(6+n-1)→...→Z13(6)→Z7(4)→Z13(5)→Z7(3)→Z13(1)→Z7(2). The layer where all the in-slot conductive wires, in the minimum equalization units, which run along the winding path are disposed rightly covers all the conductive wire layers in two stator slots. For example, as illustrated in FIG. 7, in-slot conductive wires running through No. 1 stator slot and in-slot conductive wires running through No. 13 stator slot in the minimum equalization units belong to pole positions Q1 in two different phase poles, and upon merge of the in-slot conductive wires running through two stator slots, a stator slot fully filled with the conductive wires is equivalently formed; in-slot conductive wires running through No. 2 stator slot and in-slot conductive wires running through No. 14 stator slot belong to pole positions Q2 in two different phase poles, and upon merge of the in-slot conductive wires running through two stator slots, a stator slot fully filled with the conductive wires is equivalently formed. Thus, the minimum equalization units achieve local circuit equalization. It can be seen from the winding path that at the welding end, in-slot conductive wires in a layer closest to the center of the stator core in No. 8 slot and No. 14 slot are welded into a same layer; and in-slot conductive wires in a layer closest to the center of the stator core in No. 7 slot and No. 13 slot are welded into a same layer. The details are not described herein any further.

The same phase winding includes a plurality of branches. Each of the branches is composed by a plurality of minimum equalizer units connected in series and/or in parallel. By adopting the above-mentioned winding connection path of the stator winding, the minimum number of equalization units contained in each branch of the same phase winding is the same, such that each branch of the same phase winding achieves circuit equalization.

Exemplarily, when the lead-out wire outgoes at the hairpin end, as illustrated in FIG. 8, the winding path of a minimum equalization unit is as follows: Z8(1)→Z2(3)→Z8(5)→Z2(4)→Z8(6)→Z2(6+1)→Z8(6+2)→Z2(6+3)→...→Z8(6+n)→Z14( 6+n)→Z8(6+n-1)→...→Z14(6)→Z8(4)→Z14(5)→Z8(3)→Z14(1)→Z8(2)→Z2(2)→Z7(1)→ Z1(3)→Z7(5)→Z1(4)→Z7(6)→Z1(6+1)→Z7(6+2)→Z1(6+3)→...→Z7(6+n)→Z13(6+n)-Z7(6+n-1)→...→Z13(6)→Z7(4)→Z13(5)→Z7(3)→Z13(1)→Z7(2)→Z13(2). The in-slot conductive wires, in the minimum equalization units, which run along the winding path correspond to all wire positions in the two pole positions below one phase pole, such that local circuit equalization is achieved. It can be seen from the winding path that at the welding end, in-slot conductive wires in a layer closest to the center of the stator core in No. 8 slot and No. 14 slot are welded into a same layer; and in-slot conductive wires in a layer closest to the center of the stator core in No. 7 slot and No. 13 slot are welded into a same layer. The details are not described herein any further.

Therefore, the minimum equalization unit is formed by connecting wires of different slot level positions in series, and is completely equalized under a pair of phase poles.

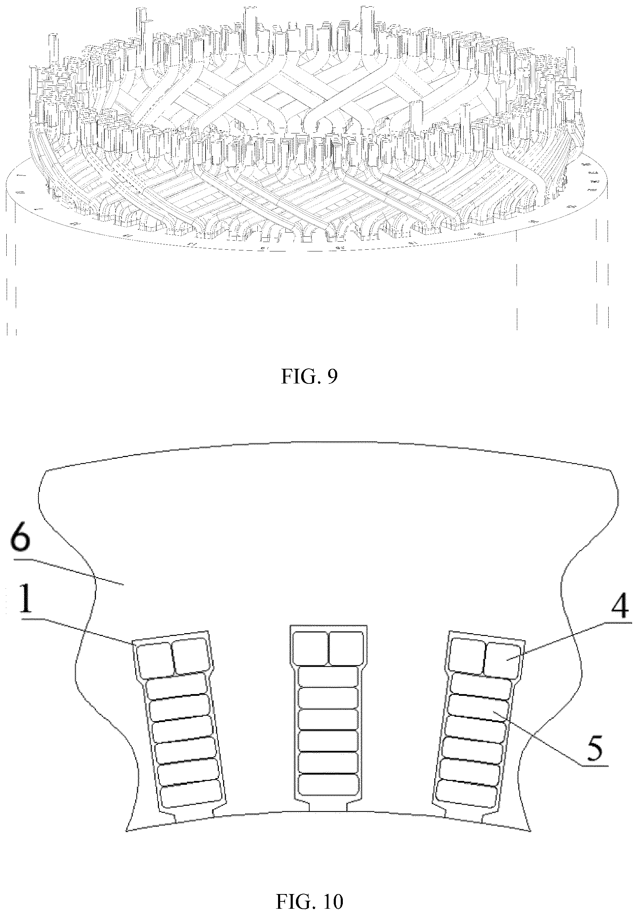

As illustrated in FIG. 9, when viewed from the turning end, the turning directions of the end windings on the inner circumferential side are not uniform, and by inwardly connecting the radial space, cross interference between the conductive wires at the inner-layer welding end is effectively avoided, thereby further facilitating control of dimensions of the end windings.

Further exemplarily, when eight conductive wires are provided in each stator slot, the U-phase winding includes a branch U1 and a branch U2, and the specific winding paths are as follows.

When the lead-out wire outgoes at the welding end, the winding path of a branch U1 is as follows: Z1(2)→Z8(1)→Z2(3)→Z8(5)→Z2(4)→Z8(6)→Z2(7)→Z8(8)→Z14(8)→Z8(7)→Z14(6)→Z 8(4)→Z14(5)→Z8(3)→Z14(1)→Z8(2)→Z2(2)→Z7(1)→Z1(3)→Z7(5)→Z1(4)→Z7(6)→Z1 (7)→Z7(8)→Z13(8)→Z7(7)→Z13(6)→Z7(4)→Z13(5)→Z7(3)→Z13(1)→Z7(2)→Z13(2)→ Z20(1)→Z14(3)→Z20(5)→Z14(4)→Z20(6)→Z14(7)→Z20(8)→Z26(8)→Z20(7)→Z26(6)→ Z20(4)→Z26(5)→Z20(3)→Z26(1)→Z20(2)→Z14(2)→Z19(1)→Z13(3)→Z19(5)→Z13(4), Z19(6)→Z13(7)→ZI9(8)→Z25(8)→Z19(7)→Z25(6)→Z19(4)→Z25(5)→Z19(3)→Z25(1), Z19(2).

At the welding end, in-slot conductive wires in a layer closest to the center of the stator core in No. 8 slot and No. 14 slot are welded into a same layer; in-slot conductive wires in a layer closest to the center of the stator core in No. 7 slot and No. 13 slot are welded into a same layer; in-slot conductive wires in a layer closest to the center of the stator core in No. 20 slot and No. 26 slot are welded into a same layer; and in-slot conductive wires in a layer closest to the center of the stator core in No. 19 slot and No. 25 slot are welded into a same layer. The branch U1 is composed of two minimum equalization units connected in series.

The winding path of a branch U2 is as follows: Z25(2)→Z32(1)→Z26(3)→Z32(5)→Z26(4→Z32(6)→Z26(7)→Z32(8)→Z38(8)→Z32(7)→ Z38(6)→Z32(4)→Z38(5)→Z32(3)→Z38(1)→Z32(2)→Z26(2)→Z31(1)→Z25(3)→Z31(5)→ Z25(4)→Z31(6)→Z25(7)→Z31(8)→Z37(8)→Z31(7)→Z37(6)→Z31(4)→Z37(5)→Z31(3)→ Z37(1)→Z31(2)→Z37(2)→Z44(1)→Z38(3)→Z44(5)→Z38(4)→Z44(6)→Z38(7)→Z44(8)→ Z2(8)→Z44(7)→Z2(6)→Z44(4)→Z2(5)→Z44(3)→Z2(1)→Z44(2)→Z38(2)→Z43(1)→Z37( 3),Z43(5)→Z37(4)→Z43(6)→Z37(7)→Z43(8)-Z1(8)-Z43(7)-Z1(6)-Z43(4)-Z1(5) →Z43(3)→Z1(1)→Z43(2).

At the welding end, in-slot conductive wires in a layer closest to the center of the stator core in No. 32 slot and No. 38 slot are welded into a same layer; in-slot conductive wires in a layer closest to the center of the stator core in No. 31 slot and No. 37 slot are welded into a same layer; in-slot conductive wires in a layer closest to the center of the stator core in No. 44 slot and No. 2 slot are welded into a same layer; and in-slot conductive wires in a layer closest to the center of the stator core in No. 43 slot and No. 1 slot are welded into a same layer. The branch U2 is composed of two minimum equalization units connected in series.

Exemplarily, when the lead-out wire outgoes at the hairpin end, the winding path of the branch U1 is as follows: Z8(1)→Z2(3)→Z8(5)→Z2(4)→Z8(6)→Z2(7)→Z8(8)→Z14(8)→Z8(7)→Z14(6)→Z8(4)→Z 14(5)→Z8(3)→Z14(1)→Z8(2)→Z2(2)→Z7(1)→Z1(3)→Z7(5)→Z1(4)→Z7(6)→Z1(7)→Z7 (8)→Z13(8)→Z7(7)→Z13(6),Z7(4),Z13(5)→Z7(3)→Z13(1)→Z7(2)→Z13(2)→Z20(1) →Z14(3)→Z20(5)→Z14(4)→Z20(6)→Z14(7)-Z20(8)-Z26(8)-Z20(7)-Z26(6)-Z20(4) →26(5)→Z20(3)→Z26(1)→Z20(2)→Z14(2)-Z19(1)→Z13(3)→Z19(5)→Z13(4)-Z19(6) →Z13(7)→Z19(8)→Z25(8)→Z19(7)→Z25(6)→Z19(4)→Z25(5)→Z19(3)→Z25(1)-Z19(2) →Z25(2).

At the welding end, in-slot conductive wires in a layer closest to the center of the stator core in No. 8 slot and No. 14 slot are welded into a same layer; in-slot conductive wires in a layer closest to the center of the stator core in No. 7 slot and No. 13 slot are welded into a same layer; in-slot conductive wires in a layer closest to the center of the stator core in No. 20 slot and No. 26 slot are welded into a same layer; and in-slot conductive wires in a layer closest to the center of the stator core in No. 19 slot and No. 25 slot are welded into a same layer. The branch U1 is composed of two minimum equalization units connected in series.

The winding path of the branch U2 is as follows: Z32(1)→Z26(3)→Z32(5)→Z26(4)→Z32(6)→Z26(7)→Z32(8)→Z38(8)→Z32(7)→Z38(6)→ Z32(4)→Z38(5)→Z32(3)→Z38(1)→Z32(2)→Z26(2)→Z31(1)→Z25(3)→Z31(5)→Z25(4)→ Z31(6)→Z25(7)→Z31(8)→Z37(8)→Z31(7)→Z37(6)→Z31(4)→Z37(5)→Z31(3)→Z37(1)→ Z31(2)→Z37(2)→Z44(1)→Z38(3)→Z44(5)→Z38(4)→Z44(6)→Z38(7)→Z44(8)→Z2(8)→ Z44(7)→Z2(6)→Z44(4)→Z2(5)→Z44(3)→Z2(1)→Z44(2)→Z38(2)→Z43(1)→Z37(3)→Z4 3(5)→Z37(4)→Z43(6)→Z37(7)→Z43(8)→Z1(8)→Z43(7)→Z1(6)-Z43(4)→Z1(5)-Z43(3 )→Z1(1)→Z43(2)→Z1(2).

At the welding end, in-slot conductive wires in a layer closest to the center of the stator core in No. 32 slot and No. 38 slot are welded into a same layer; in-slot conductive wires in a layer closest to the center of the stator core in No. 31 slot and No. 37 slot are welded into a same layer; in-slot conductive wires in a layer closest to the center of the stator core in No. 44 slot and No. 2 slot are welded into a same layer; and in-slot conductive wires in a layer closest to the center of the stator core in No. 43 slot and No. 1 slot are welded into a same layer. The branch U2 is composed of two minimum equalization units connected in series.

Other combinations of double-conductive wire layers and single-conductive wire layers are possible in the present application. For example, FIG. 10 is a partial cross-sectional view of a stator core with six independent conductive wire layer groups in unequal-length stator slots according to some embodiments of the present disclosure.

In the embodiments of the present disclosure, two rectangular conductive wires of the double-wire layer are arranged along a circumferential direction of the stator core 1, and a length-to-width ratio of each of the rectangular conductive wires is less than 2.5. A length-to-width ratio of the single-conductive wire layer is less than 3. While ensuring that the rectangular conductive wire in the independent conductive wire layer group 5 generates less loss, the difficulty of the end turning machining of the rectangular conductive wire is lowered, and U-shaped line formation is facilitated.

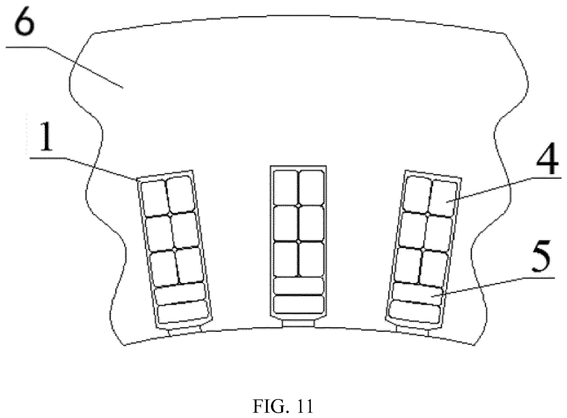

The stator slots according to the present disclosure may be slots of unequal width, such as trapezoidal slots, or rectangular slots of equal width. FIG. 11 is a partial cross-sectional view of a stator core with two independent conductive wire layer groups in equal-length stator slots according to some embodiments of the present disclosure. As illustrated in FIG. 11, the stator slots are provided with the same width, and three combined conductive wire layer groups 4 and two independent conductive wire layer groups 5 are provided in the stator slots, and totally eight rectangular conductive wires are accommodated. The rectangular conductive wires in the three combined conductive wire layer groups 4 are all of the same size, and the rectangular conductive wires in the two-layer independent conductive wire layer group 5 are all of the same size, such that the in-slot windings are only categorized into two line types.

With regard to the equal-width stator slots, the present disclosure not only optimizes the number of conductive wire layers along the radial direction of the stator core, but also optimizes the type of line shape, thereby further lowering the difficulty of the production process.

Although the present application is described in detail with reference to these embodiments, a person skilled in the art may also make various modifications to the technical solutions disclosed in the embodiments, or make equivalent replacements to a part of the technical features contained therein. Such modifications or replacement, made without departing from the principles of the present disclosure, shall fall within the scope of the present disclosure.

## Claims

1. A stator assembly, comprising: a stator core and a stator winding; wherein a plurality of stator slots are defined in the stator core, the stator slots being successively arranged in an annular array along a circumferential direction of the stator core; and wires of the stator winding are rectangular conductive wires, the wires being evenly and symmetrically arranged in the stator slots;
m+n layers of conductive wires are successively arranged in each of the stator slots along a radial direction of the stator core, wherein the m layers of conductive wires close to an outer side of the stator core are double-conductive wire layers, and the remaining n layers of conductive wires are single-conductive wire layers, m being greater than or equal to 1, and n being an even number greater than or equal to 2; and
at a welding end of the stator winding, all the remaining conductive wires closest to a center of the stator core, except conductive wires serving as lead-out wires, are welded into a same layer.

2. The stator assembly according to claim 1, wherein
when the lead-out wires are positioned at a hairpin end, in-slot conductive wires in a layer closest to the center of the stator core that are positioned at the welding end are welded into a same layer; or
when the lead-out wires are positioned at the welding end, all the remaining in-slot conductive wires, except the conductive wires serving as the lead-out wires, in the layer closest to the center of the stator core that are positioned at the welding end are welded into a same layer.

3. The stator assembly according to claim 1 or 2, wherein at the welding end of the stator winding, end portions of all the remaining in-slot conductive wires, except the conductive wires serving as the lead-out wires, in the layer closest to the center of the stator core are organized into two turning directions, wherein the end portions of the in-slot conductive wires in a same turning direction are each provided with a bending portion, the bending portion being bent towards the center of the stator core.

4. The stator assembly according to claim 3, wherein a vacant slot is arranged at an end, close to the center of the stator core, of each of the stator slots, and the bending portion is positioned in the vacant slot.

5. The stator assembly according to claim 1, wherein when the number m of layers of the double-conductive wire layers is equal to 3, with respect to spanning of the stator winding at the hairpin end, the conductive wires in a layer closest to the center of the stator core employ combined spanning of long pitch, full pitch, and short pitch, and the conductive wires in the other layers merely employ full pitch spanning; and with respect to connection at the hairpin end, No. 1 conductive wire is connected to No. 2 conductive wire in another stator slot, No. 3 conductive wire is connected to No. 5 conductive wire in another stator slot, No. 4 conductive wire is connected to No. 6 conductive wire in another stator slot, and No. a conductive wire is connected to No. a+1 conductive wire in another stator slot; and
with respect to spanning of the stator winding at the welding end, the conductive wires employ full pitch spanning; and with respect to connection at the welding end, No. 1 conductive wire is connected to No. 3 conductive wire in another stator slot, No. 2 conductive wire is connected to No. 2 conductive wire in another stator slot, No. b conductive wire is connected to No. b+1 conductive wire in another stator slot, and No. 6+n conductive wire is connected to No. 6+n conductive wire in another stator slot;
wherein a is an odd number, and 6+1≤a<6+n; b is an even number, and 4≤b<6+n; n is the number of single-conductive wire layers, 3+n is the number of all the conductive wire layers in the stator slots, and 6+n is the number of conductive wires in the stator slots.

6. The stator assembly according to claim 5, wherein each phase winding of the stator winding comprises one or a plurality of branches, each of the branches is formed by a plurality of minimum equalizer units connected in series and/or in parallel.

7. The stator assembly according to claim 6, wherein in a same branch, the rectangular conductive wires in different conductive wires layer groups are connected in series.

8. The stator assembly according to any one of claims 1 to 7, wherein the stator slots are unequal-width stator slots, and widths of the stator slots receiving the double-conductive wire layers are greater than widths of the stator slots receiving the single-conductive wire layers.

9. The stator assembly according to claim 8, wherein the widths of the double-conductive wire layers closest to an outer circumferential side of the stator core are maximum.

10. The stator assembly according to claim 9, wherein in a same stator slot, a thickness of the conductive wire in a double-conductive wire layer closest to the outer circumferential side of the stator core is less than a thickness of the conductive wire in any of the other double-conductive wire layers; and a width of the conductive wire in the double-conductive wire layer closest to the outer circumferential side of the stator core is greater than a width of the conductive wire in any of the other double-conductive wire layers.

11. The stator assembly according to any one of claims 1 to 7, wherein the stator slots are equal-width stator slots.

12. The stator assembly according to claim 11, in a same stator slot, a sum of widths of all the conductive wires in the double-conductive wire layers is equal to a width of a single-conductive wire layer.

13. The stator assembly according to any one of claims 1 to 12, wherein a length-to-width ratio of the rectangular conductive wire in the double-conductive wire layer is not greater than 2.5, and a length-to-width ratio of the rectangular conductive wire in the single-conductive wire layer is not greater than 3.

14. A motor, comprising: the stator assembly as defined in any one of claims 1 to 13.
